# EUROPEAN PATENT SPECIFICATION

(11) **EP 2 095 863 B1**
(45) Date of publication and mention of the grant of the patent: **25.04.2012**
(21) Application number: 08381029.1
(22) Date of filing: 03.09.2008
(51) Int. Cl.: B01D 53/26, B65D 81/26, F24F 3/14

(54) **Anti-Humidity Bag**
Anti-Feuchtigkeitsbeutel
Sac anti-humidité

(30) Priority: 22.02.2008 ES 200800372 U
(43) Date of publication of application: 02.09.2009
(73) Proprietor: Vicedo Vicedo, Juan, 46880 Bocairent (ES)
(72) Inventor: Vicedo Vicedo, Juan, 46880 Bocairent (ES)
(74) Representative: Isern-Jara, Nuria

(56) References cited:
- CN-A- 1 522 938
- JP-A- 2001 178 997
- US-A1- 2005 098 450

## Description

### OBJECT OF THE INVENTION

This invention refers to a bag which has been specially designed to comprise a humidity adsorbent element, to be used in cupboards, or any other place where a dry atmosphere is required, in order to prevent deterioration due to said humidity of the items in that particular area.

The purpose of the invention is to provide a humidity adsorbent device with considerable adsorption capacity, which may be used indefinitely due to its special structure.

### BACKGROUND TO THE INVENTION

Within the scope of practical application of the invention, the use of specific devices are known in the form of bags, or similar items, which contain material with powerful damp adsorption properties. The problem with these devices is that they have a limited adsorption capacity, so that once they are saturated, the adsorbed humidity begins to precipitate as liquid, which obviously contributes to increasing dampness in the environment in question.

It is known from the state of the art a bag for moisture removal as the one disclosed in US 2005098450 which comprises a box with a box cover containing exsiccator and a bag for enclosing the exsiccator box and the box cover is provided with many fine holes,

In CN 1522938 it is disclosed a moisture-absorbing bag which has simple structure and is convenient for use for container, and is characterized by that it is formed from external bag, internal bag and hanging hook, the inner cavity of the described external bag is divided into upper moisture-absorbing cavity and lower liquor-collecting cavity, the side wall of the upper moisture-absorbing cavity is equipped with several small holes, the internal bag in which the moisture-absorbing agent is held is placed in the upper moisture-absorbing cavity of external bag, the internal bag is aligned with opening of single face of external bag, folded and drawn in, then is fixedly connected with hanging hook placed on the external bag.

And, in JP 2001178997 it is disclosed a dehumidifier capable of continuously and promptly drying quilts by using dry air.

### DESCRIPTION OF THE INVENTION

The anti-humidity bag proposed in this invention satisfactorily resolves the aforementioned problem with a high adsorption capacity which may be unlimited, as a result of the special structure to be detailed below.

For this purpose, the bag proposed in this invention comprises as it is expressed in claim 1, a bag which has two compartments or deposits defined in its interior, one below and the other above, and which communicate through a narrow conduct. The upper compartment or deposit of the bag is provided with a plurality of holes which enable air to pass into the interior of the compartment, in which a breathable bag is established which contains special anti-humidity granules so that said granules permit humidity to be adsorbed from the air passing through bag, providing a dry environment which permits optimum preservation of the items kept in the place where the bag is being used.

As a result of this structure, when the granules reach their saturation point, the adsorbed liquid will precipitate into the lower compartment through gravity, thus permitting said granules to continue adsorbing humidity from the air until the lower compartmentis completely full. In accordance with another of the characteristics of th e invention, th e lower compartmentcontaining the precipitated water may be provided with an outlet valve at its base so that it can be easily and rapidly emptied, and in this way the device can be used indefinitely providing optimum service. Finally, it should be pointed out that the bag is provided in its upper part with means for hanging it.

### DESCRIPTION OF THE DRAWINGS

In order to complete this description and to enable a greater understanding of the characteristics of the invention, in accordance with a practical preferred embodiment thereof, a set of drawings are attached which form an integral part of this description and which are illustrative but not restrictive of the invention.
Figure 1 shows an elevated view of an example of an embodiment of an anti-humidity bag.
Figure 2 shows an elevated view and a longitudinal section of a second embodiment of an anti-humidity bag with anti-return means for the lower deposit.
Figure 3 is an elevated view of a third example of an embodiment of an anti-humidity bag differing from that shown in figure 2 in respect of the means for hanging it.

### PREFERRED EMBODIMENT OF THE INVENTION

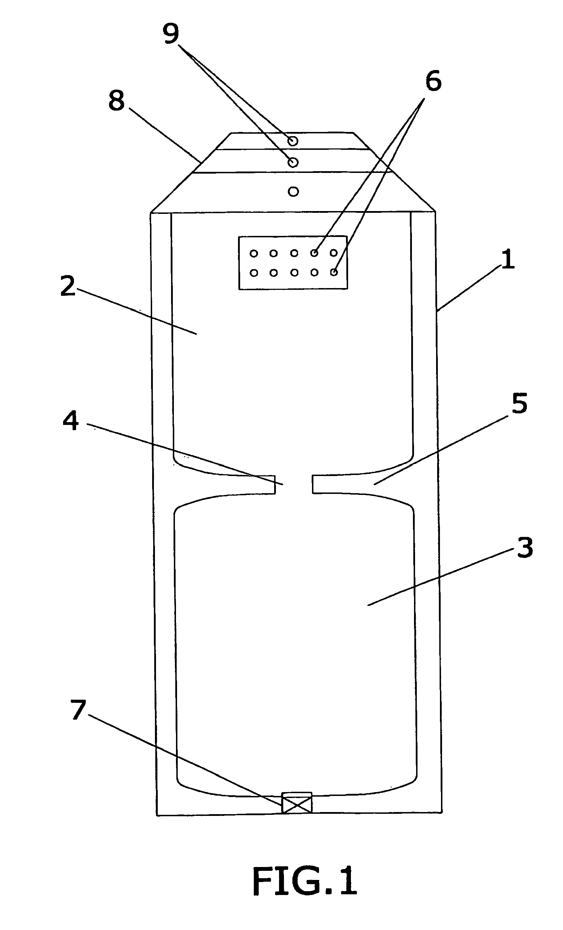

In view of the figure indicated it may be seen that the anti-humidity bag in this invention comprises a bag (1) made from plastic material, which in the examples of practical embodiment chosen, is provided with a vertically elongated rectangular configuration, but which could have other configurations based on different lines of design without this affecting the essence of the invention, a bag (1) in which a compartment or upper compartment(2) is defined, and a lower compartment or compartment(3), which is watertight and communicates with the upper compartment(2) through a narrow conduct (4), which in figure 1 is situated in the mid zone of the separating partition (5) defined between the two compartments or deposits. Both compartments or deposits may be provided with different or equal volume capacity without this affecting the essence of the invention.

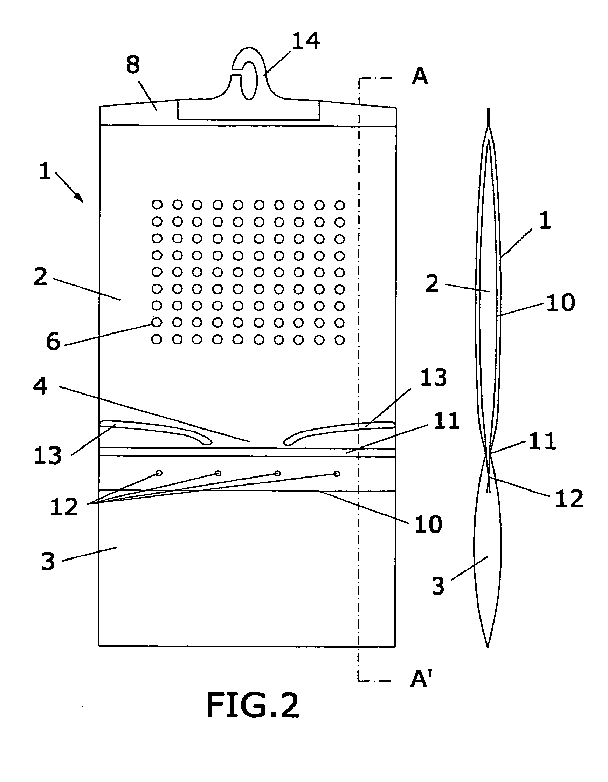

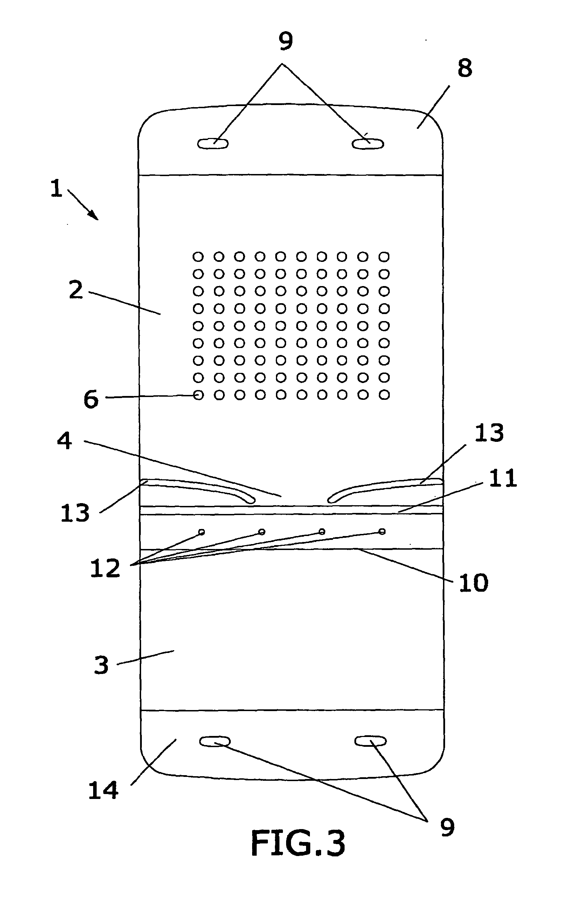

In Figure 1 the upper compartment(2) shows an upper zone provided with a plurality of small holes (6) which permit air to pass into the compartment(2). In figures 2 and 3, a large part of the surface of the upper compartment (2) is provided with the aforementioned holes (6).

A s previously commented, in th e aforementioned compartment(2) a material with a high adsorbency capacity will be established, which is not represented in the figures, preferably in granule form and housed inside a breathable bag, in order to facilitate maximum surface contact between the adsorbent material and damp air. The bag may be supplied with its edge or upper opening either open or sealed, provided that in the latter case the adsorbent material is already inserted in the aforementioned compartment(2).

Therefore, an d as mentioned previously, the aforementioned adsorbent granules eliminate the humidity from the air passing through the holes (6) in the bag, until it reaches saturation point in which the adsorbed liquid precipitates through simple gravity, so that this flows through the conduct (4) established in the bottom of the compartment(2) to the collector compartment(3), thus permitting it to continue adsorbing humidity until it becomes saturated again, and so the cycle is repeated indefinitely until said lower compartment(3) is completely full, in which case a valve (7) may be fitted in the lower zone so that it may be emptied, and the device may continue to operate. Optionally the upper compartment (2) may incorporate means for opening and providing access thereto, so that the adsorbent material may be substituted. The device may be designed to be reused, or it can be disposable in which case it will not be provided with an outlet valve (7).

Figures 2 and 3 show an example of the embodiment of the anti-humidity bag which is the subject of the invention, and which is suitable for use in those applications where there is a possibility of brusque movements, such as for example, in boats or in containers transporting merchandise. In this cases these brusque movements may cause the liquid in the lower compartment(3) to pass back into the upper deposit(2) mixing with the granules and producing an amalgam which could prevent normal flow of liquid to the lower compartment(3). In order to resolve this technical problem, the bag (1) comprises a second internal membrane(10) in the upper compartment (2) and in part of the lower compartment(3) normally made from a material which is thinner than the bag's (1) material and which in the upper compartment(2) includes holes (6)which coincide with those of the bag (1).

The internal membrane(10) contains in the lower compartment(3) a type of anti-return valve which prevents the aforementioned reflux of liquid from the lower compartment(3) to the upper compartment(2) in the event that the anti-humidity bag were subjected to brusque movements. For this purpose each of the faces of the bag(1) and the internal membrane(10) between the upper compartment(2) and the lower compartment(3)comprise a continuous zone (11)connecting the two, which is extended transversally to the bag (1) and which additionally is provided in the lower compartment(3) with an internal membrane (10) having the two faces joined (12), in this case in a discontinuous manner.

In order to channel the path of the liquid between the upper (2) and lower deposits (3), in the lower part of the upper compartment (2), downward transversal lines (13) are situated towards the central zone which joins both faces of the bag (1) and the internal membrane (10), and which determine the conduct (4) from the upper compartment(2) to the lower compartment(3).

Finally, it should be mentioned that the bag(1) incorporates a tongue (8) in the upper part. Another tongue may also be incorporated in the lower part (14). These (8, 14) may be provided with holes (9) for joining the corresponding means of hanging the bag. In figure 2 the means of hanging provided by the tongue (8) correspond to a hook or hanger (14). Whereas in figure 3 the holes (9) for joining the means for hanging are situated both on an upper tongue (8) and a lower tongue (14), so that using the appropriate means, for example by passing a tape throughout the aforementioned holes (9) attaching the anti-humidity bag by two points which reduces the movements to which the bag may be subjected.

## Claims

1. Anti-humidity bag, which , being of the type comprising humidity adsorbent material, preferably materialised in the form of granules, consists of a bag (1), which has two faces in which is defined an upper compartment (2), designed to store the material which has adsorbed the humidity, provided with holes (6) for the passage of air through it, and a lower compartment (3) communicated above with the upper compartment (2) designed to receive the saturated liquid which precipitates through gravity from the upper compartment(2) **characterized in that** the bag (1) comprises an internal membrane (10) which, in the upper compartment (2), is provided with holes (6) which coincide with those of the bag (1), and the internal membrane has two faces between which the humidity adsorbent material is stored and the internal membrane (1) extends in the upper compartment(2) and into part of the lower compartment (3), and wherein each of the faces of the bag (1) and of the internal membrane(10) between the upper compartment (2) and the lower compartment (3) comprise a continuous zone (11) which connects the two faces, and wherein the continuous zone is extended transversally to the bag (1), and the internal membrane is additionally provided in the lower compartment (3) with the two faces joined (12) in a discontinuous manner.

2. Anti-humidity bag, according to claim 1, **characterised in that** it incorporates a discharge valve (7) of the lower compartment(3).

3. Anti-humidity bag, according to claim 1, **characterised in that** the upper compartment (2) incorporates means for opening in order to substitute the material which adsorbs the humidity.

4. Anti-humidity bag, according to claim 1, **characterised in that** it incorporates means for hanging the bag.

5. Anti-humidity bag, according to claim 1, **characterised in that** in the lower part of the upper compartment (2) there are downward transversal lines (13) drawn to a central zone which joins both faces of the bag (1) and of the internal membrane (10) and wherein said downward transversal lines and which determine a conduct (4) for passage from the upper compartment to the lower one(3).

## Patentansprüche

1. Anti-Feuchtigkeitsbeutel, der, von der Art, die Feuchtigkeit absorbierendes Material, vorzugsweise in der Form von Granulat verwirklicht, beinhaltet, aus einem Beutel (1) besteht, welcher zwei Flächen aufweist, in dem Folgendes definiert ist: eine obere Kammer (2), entworfen um das Material zu lagern, welches die Feuchtigkeit absorbiert hat, versehen mit Löchern (6) für den Durchgang von Luft **dadurch**, und eine untere Kammer (3), die oben mit der oberen Kammer (2) in Verbindung steht, entworfen, um die gesättigte Flüssigkeit aufzunehmen, die durch Schwerkraft aus der oberen Kammer (2) präzipitiert, **dadurch gekennzeichnet, dass** der Beutel (1) eine innere Membran (10) beinhaltet, die in der oberen Kammer (2) mit Löchern (6) versehen ist, die mit denen des Beutels (1) übereinstimmen, und dass die innere Membran zwei Flächen aufweist, zwischen denen das Feuchtigkeit absorbierende Material gelagert wird, und dass sich die innere Membran (1) in der oberen Kammer (2) und in einen Teil der unteren Kammer (3) erstreckt, und wobei jede der Flächen des Beutels (1) und der inneren Membran (10) zwischen der oberen Kammer (2) und der unteren Kammer (3) einen durchgehenden Bereich (11) beinhaltet, welcher die zwei Flächen verbindet, und wobei sich der durchgehende Bereich transversal zu dem Beutel (1) erstreckt, und wobei die innere Membran zudem in der unteren Kammer (3) bereitgestellt ist, wobei die zwei Flächen auf eine nicht durchgehende Weise verknüpft (12) sind.

2. Anti-Feuchtigkeitsbeutel gemäß Anspruch 1, **dadurch gekennzeichnet, dass** er ein Ablassventil (7) der unteren Kammer (3) umfasst.

3. Anti-Feuchtigkeitsbeutel gemäß Anspruch 1, **dadurch gekennzeichnet, dass** die obere Kammer (2) ein Mittel zum Öffnen umfasst, um das Material, welches die Feuchtigkeit absorbiert, auszutauschen.

4. Anti-Feuchtigkeitsbeutel gemäß Anspruch 1, **dadurch gekennzeichnet, dass** er ein Mittel zum Aufhängen des Beutels umfasst.

5. Anti-Feuchtigkeitsbeutel gemäß Anspruch 1, **dadurch gekennzeichnet, dass** in dem unteren Teil der oberen Kammer (2) nach unten gerichtete transversale Linien (13) vorhanden sind, die zu einem zentralen Bereich gezogen sind, welcher beide Flächen des Beutels (1) und der inneren Membran (10) verknüpft, und wobei die nach unten gerichteten transversalen Linien eine Leitung (4) für den Durchgang von der oberen Kammer zu der unteren (3) bestimmen.

## Revendications

1. Sachet anti-humidité qui, étant du type comprenant un matériau absorbeur d'humidité, de préférence matérialisé sous la forme de granules, consiste en un sachet (1), qui a deux faces, dans lequel il est défini un compartiment supérieur (2), conçu pour stocker le matériau qui a absorbé l'humidité, pourvu de trous (6) pour que de l'air passe à travers, et un compartiment inférieur (3) en communication au-dessus avec le compartiment supérieur (2) conçu pour recevoir le liquide saturé qui se précipite par gravité depuis le compartiment supérieur (2) **caractérisé en ce que** le sachet (1) comprend une membrane interne (10) qui, dans le compartiment supérieur (2), est pourvue de trous (6) qui coïncident avec ceux du sachet (1), et la membrane interne a deux faces entre lesquelles est stocké le matériau absorbeur d'humidité et la membrane interne (1) s'étend dans le compartiment supérieur (2) et jusque dans une partie du compartiment inférieur (3), et dans lequel chacune des faces du sachet (1) et de la membrane interne (10) entre le compartiment supérieur (2) et le compartiment inférieur (3) comprend une zone continue (11) qui raccorde les deux faces, et dans lequel la zone continue est amenée à s'étendre transversalement au sachet (1), et la membrane interne est de manière additionnelle fournie dans le compartiment inférieur (3) avec les deux faces jointes (12) d'une manière discontinue.

2. Sachet anti-humidité, selon la revendication 1, **caractérisé en ce qu'**il incorpore une valve de décharge (7) du compartiment inférieur (3).

3. Sachet anti-humidité, selon la revendication 1, **caractérisé en ce que** le compartiment supérieur (2) incorpore un moyen pour ouvrir afin de remplacer le matériau qui absorbe l'humidité.

4. Sachet anti-humidité, selon la revendication 1, **caractérisé en ce qu'**il incorpore un moyen pour suspendre le sachet.

5. Sachet anti-humidité, selon la revendication 1, **caractérisé en ce que** dans la partie inférieure du compartiment supérieur (2) il y a des lignes transversales vers le bas (13) tirées vers une zone centrale qui joint les deux faces du sachet (1) et de la membrane interne (10) et dans lequel lesdites lignes transversales vers le bas déterminent une conduite (4) pour le passage du compartiment supérieur au compartiment inférieur (3).
